# FASCICULE DE BREVET EUROPEEN

(11) **EP 3 905 886 B1**
(45) Date de publication et mention de la délivrance du brevet: **05.10.2022**
(21) Numéro de dépôt: 19832383.4
(22) Date de dépôt: 20.12.2019
(51) Int. Cl.: A21C 11/04

(54) **USTENSILE DE CUISINE PERMETTANT DE TRAVAILLER UNE PÂTE**
KOCHUTENSIL ZUR BEARBEITUNG VON TEIG
COOKING UTENSIL FOR WORKING DOUGH

(30) Priorité: 31.12.2018 FR 1874413
(43) Date de publication de la demande: 10.11.2021
(73) Titulaire: Jensen Industrial Limited, San Po Kong Kowloon (HK); Marrie, Lionel, San Po Kong Kowloon (HK)
(72) Inventeur: MUCHA, Loic, San Po Kong Kowloon (HK); MARRIE, Lionel, San Po Kong Kowloon (HK)
(74) Mandataire: LLR
(86) Numéro de dépôt international: PCT/EP2019/086640
(87) Numéro de publication internationale: WO 2020/141104

(56) Documents cités:
- EP-A1- 0 105 582
- EP-B1- 0 105 582
- FR-A- 723 577
- FR-A- 741 535
- US-A- 2 099 679
- US-A- 3 416 466
- US-A1- 2005 150 394

## Description

La présente invention concerne un ustensile de cuisine permettant de travailler une pâte, de type rouleau ou incluant un rouleau. Cet ustensile peut être de type rouleau, c'est-à-dire comprendre essentiellement une pièce cylindrique apte à être actionnée à la main, par appui direct des mains de l'utilisateur sur cette pièce ; il peut également inclure un rouleau, c'est-à-dire comprendre, en plus de la pièce cylindrique formant le rouleau proprement dit, une broche formant l'axe de pivotement de cette pièce et des poignées de saisie ; il peut aussi comprendre, pour des rouleaux de petites dimensions, un châssis dans lequel est monté le rouleau, ce châssis formant une poignée apte à être saisie d'une main pour le déplacement de l'ustensile sur une pâte à travailler.

Il est bien connu d'utiliser un rouleau lisse pour étendre une pâte ; il est également bien connu d'utiliser un ustensile, dit "roulette à biscuits", comprenant un rouleau en matière synthétique moulée, en général en silicone, sur lequel sont aménagés des reliefs ; ces reliefs peuvent comprendre des nervures minces, permettant, lorsque l'ustensile est déplacé sur une pâte, de découper cette pâte avant cuisson, afin de diviser la pâte en des pâtons de forme appropriée pour la confection des produits à réaliser, ou qui permettent, après cuisson de la pâte, de diviser la pâte cuite en des produits de forme déterminée, en particulier des biscuits ; ces reliefs peuvent également permettre d'imprimer dans la pâte, avant cuisson, des motifs particuliers, afin de donner à la pâte une conformation favorable à la confection des produits à réaliser, par exemple des perçages, ou des motifs imposés par les caractéristiques du produit à obtenir, ou encore des motifs simplement décoratifs.

Un tel rouleau moulé avec des reliefs a pour inconvénient d'être onéreux à fabriquer compte tenu de la complexité du moule qu'il est nécessaire de prévoir. Il en résulte un prix de revient relativement élevé de l'ustensile, qui n'est pas adapté à un produit de ce genre et limite le nombre de rouleaux différents, présentant des reliefs différents, qu'il est possible de fabriquer, et qui limite par conséquent les possibilités offertes aux utilisateurs.

La publication de demande de brevet N° US 2005/150394 A1 décrit un ustensile de cuisine incluant une roue de marquage d'une pâte alimentaire, dont la périphérie peut être équipée d'une pièce allongée en un matériau souple présentant des reliefs, ces reliefs permettent de découper et/ou marquer la pâte avant cuisson lorsque l'ustensile est déplacé en roulement sur cette pâte.

Cet ustensile a des possibilités d'utilisation qui sont limitées au marquage de la périphérie d'une pâte à pizza circulaire ; or, il serait souhaitable de pouvoir disposer d'un ustensile ayant des possibilités d'utilisation bien supérieures. De plus, les possibilités de modification du motif marqué sont très limitées et la modification de ce motif est peu pratique à mettre en œuvre.

La présente invention a pour objectif de remédier à ces inconvénients pratiques importants.

L'ustensile qu'elle concerne comprend, de manière connue en soi, une pièce de révolution dont la périphérie est apte à être équipée d'une pièce allongée en un matériau souple présentant des reliefs, ces reliefs permettant de découper et/ou marquer une pâte avant cuisson lorsque la pièce de révolution est déplacée en roulement sur cette pâte.

Selon l'invention ladite pièce de révolution est un rouleau et ce rouleau comprend :
- au moins une plaque en une matière élastiquement souple, comprenant lesdits reliefs aménagés sur elle ; la plaque est apte à être déformée élastiquement de façon à pouvoir adopter une forme enroulée dans laquelle deux bords opposés de la plaque sont placés l'un contre l'autre ; chacun de ces deux bords opposés comprend des premiers moyens de liaison circonférentielle et des premiers moyens de liaison radiale ; et
- un corps de rouleau, cylindrique ou essentiellement cylindrique, comprenant des deuxièmes moyens de liaison circonférentielle aptes à venir en engagement, de façon libérable, avec lesdits premiers moyens de liaison circonférentielle pour lier circonférentiellement lesdits bords opposés audit corps, et des deuxièmes moyens de liaison radiale aptes à venir en engagement, de façon libérable, avec lesdits premiers moyens de liaison radiale pour lier radialement lesdits bords opposés audit corps ;
- chaque plaque présente, au niveau de chacun desdits bords et le long de ces bords, des nervures dont un flanc constitue lesdits premiers moyens de liaison circonférentielle,
- ledit corps présente une rainure longitudinale, aménagée radialement vers l'intérieur de ce corps et délimitée latéralement par des parois de ce corps, ces parois constituant lesdits deuxièmes moyens de liaison circonférentielle, et
- la rainure est dimensionnée de façon à recevoir, de façon ajustée, lesdites nervures l'une contre l'autre ;
la dimension de la plaque selon une direction perpendiculaire auxdits bords opposés correspond à la circonférence dudit corps de telle sorte que, lorsque la plaque est enroulée sur ce corps et que lesdits moyens de liaison respectifs sont en engagement dans ladite rainure, lesdits bords opposés soient maintenus sur ledit corps en étant à proximité l'un de l'autre et en formant ainsi une surface circonférentielle continue.

L'invention consiste par conséquent à prévoir une plaque en matière élastiquement souple et déformable, apte à adopter une forme, notamment plane, facilitant l'aménagement desdits reliefs sur elle, et à adopter la forme enroulée précitée permettant la découpe et/ou le marquage d'une pâte. Chaque plaque peut notamment être obtenue par moulage, avec lesdits reliefs aménagés d'un seul tenant avec elle ; un moule d'obtention d'une telle plaque présente une structure bien plus simple qu'un moule selon la technique antérieure, et peut en particulier être seulement en deux parties.

La liaison circonférentielle de chaque plaque audit corps est réalisée en engageant la nervure de l'un desdits bords de la plaque dans la rainure, avec calage de cette nervure contre la paroi latérale correspondante du corps qui délimite la rainure, puis, après enroulement de la plaque autour du corps, en engageant la nervure de l'autre desdits bords dans la rainure, avec calage de cette nervure contre l'autre paroi latérale du corps qui délimite la rainure.

L'ustensile peut comprendre plusieurs plaques, présentant des reliefs différents, et ces plaques sont aptes à être interchangées sur ledit corps, de façon à permettre d'opérer des travails différents avec un même ustensile. Un utilisateur peut ainsi détenir un ustensile unique incluant une pluralité de plaques différentes pour opérer ces travails, et n'est donc pas obligé de détenir plusieurs rouleaux comme selon la technique antérieure.

Les moyens de liaison radiale peuvent être constitués uniquement par des frottements qui résultent d'un engagement forcé desdites nervures dans ladite rainure ; selon une possibilité, toutefois, chaque nervure comprend lesdits premiers moyens de liaison radiale et le corps comprend, au niveau de la rainure, lesdits deuxièmes moyens de liaison radiale.

Selon une forme de réalisation préférée de l'invention, dans ce cas, l'ustensile comprend une barrette présentant lesdits deuxièmes moyens de liaison radiale sur un premier côté longitudinal et présentant une surface incurvée sur un deuxième côté longitudinal opposé audit premier côté longitudinal, cette surface incurvée ayant un même rayon de courbure que le rayon de courbure dudit corps ; la barrette est apte à être insérée dans ladite rainure dans une première position, dans laquelle son premier côté longitudinal est situé sur le côté radialement extérieur de la rainure, exposant ainsi lesdits deuxièmes moyens de liaison radiale dans la rainure de façon à permettre la venue desdits premiers moyens de liaison radiale en engagement avec ces deuxièmes moyens de liaison radiale ; la barrette est également apte à être insérée dans ladite rainure dans une deuxième position, dans laquelle son deuxième côté longitudinal est situé sur le côté radialement extérieur de la rainure, exposant ladite surface incurvée sur le côté radialement extérieur de la rainure ; la barrette présente, entre ledit premier côté et ledit deuxième côté, une dimension telle que, dans ladite deuxième position, ladite surface incurvée soit située en affleurement avec la surface circonférentielle du corps et dans la continuité de cette surface.

Dans ladite première position, la barrette permet le montage d'une plaque à reliefs précitée sur le corps ; dans ladite deuxième position, la barrette permet de combler la rainure et de conférer au corps de rouleau une forme cylindrique, permettant à ce corps d'être utilisé comme un rouleau lisse classique.

Les moyens de liaison radiale peuvent notamment être à interengagement, en particulier à clipsage ; ils peuvent également être magnétiques.

Pour faciliter la séparation d'une plaque d'avec ledit corps, chaque plaque peut avantageusement comprendre une languette de traction solidaire d'elle.

Une traction peut ainsi être exercée manuellement sur cette languette afin de séparer lesdits moyens de liaison respectifs.

L'invention sera bien comprise, et d'autres caractéristiques et avantages de celle-ci apparaîtront, en référence au dessin schématique annexé ; ce dessin représente, à titre d'exemples non limitatifs, plusieurs formes de réalisation possibles de l'ustensile concerné. Dans ce dessin :
La figure 1 est une vue en perspective de l'ustensile de cuisine concerné, selon une première forme de réalisation ;
la figure 2 est une vue de l'ustensile similaire à la figure 1, avant montage d'une plaque à reliefs que le rouleau de l'ustensile comprend ;
la figure 3 est une vue en perspective éclatée d'un corps de rouleau et d'une barrette que comprend l'ustensile ;
la figure 4 est une vue en perspective de trois plaques à relief que comprend l'ustensile, aptes à être mises en place, l'une en remplacement d'une autre, sur le corps de rouleau ;
la figure 5 est une vue en perspective de l'une de ces trois plaques, par un côté opposé à celui selon lequel cette plaque est visible sur la figure 3 ;
la figure 6 est une vue de l'ustensile en coupe transversale, avec l'une des plaques montée sur le corps de rouleau ;
la figure 7 est une vue de l'ustensile similaire à la figure 6, sans plaque montée sur le corps de rouleau ;
la figure 8 est une vue de l'ustensile selon une deuxième forme de réalisation, avec l'une desdites plaques séparée du corps de rouleau, une autre plaque en début de montage sur ce corps et une troisième plaque montée sur ce corps ;
la figure 9 est une vue partielle de l'ustensile selon la figure 8, en perspective éclatée ;
la figure 10 est une vue en perspective de l'ustensile selon une troisième forme de réalisation ;
la figure 11 est une vue de cet ustensile en coupe transversale, avec la plaque montée sur le corps de rouleau ;
la figure 12 est une vue de l'ustensile similaire à la figure 2, selon une troisième forme de réalisation ; et
la figure 13 est une vue en perspective, similaire la figure 5, d'une plaque utilisable avec l'ustensile selon la troisième forme de réalisation.

### Description détaillée

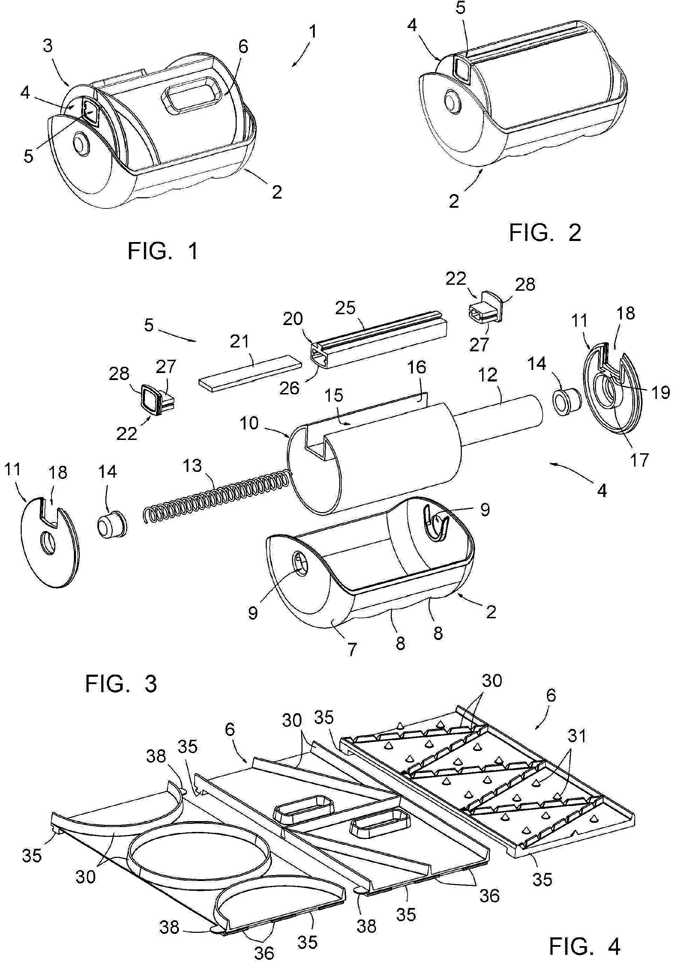

La figure 1 représente un ustensile de cuisine 1 permettant de travailler une pâte alimentaire, en particulier une pâte utilisable en pâtisserie. Cet ustensile 1 comprend un châssis 2, et un rouleau 3 monté rotatif sur ce châssis 2, ce rouleau étant formé par un corps de rouleau 4, une barrette 5 et une plaque 6 à reliefs, montée sur le corps de rouleau 4.

La figure 2 montre plus particulièrement le corps de rouleau 4 et la barrette 5, la plaque 6 étant retirée.

Comme cela est plus particulièrement visible sur la figure 3, le châssis 2 est formé par une coque 7 incluant une paroi centrale arrondie et deux parois transversales d'extrémité. La paroi centrale forme une poignée de préhension manuelle de l'ustensile 1, pour le déplacement de ce dernier au-dessus d'une pâte, qui présente, dans l'exemple représenté, des empreintes 8 pour la réception des doigts d'une main. Les parois transversales présentent des trous coaxiaux de montage du rouleau 3 sur le châssis 2.

Le corps de rouleau 4 est formé par une pièce 10 de forme générale cylindrique, deux flasques d'extrémité 11, un tube 12, un ressort 13 et deux embouts 14. La pièce 10 forme une paroi circonférentielle et présente une rainure longitudinale 15, aménagée radialement, qui est délimitée latéralement par des parois latérales 16 de la pièce 10 et qui s'étend sur l'ensemble de la longueur de cette pièce. Chaque flasque d'extrémité 11 forme une rainure périphérique permettant son emboîtement sur une extrémité correspondante de la pièce 10, et présente une virole 17 pour l'emmanchement du tube 12, ainsi qu'un trou coaxial à la virole. Chaque flasque 11 présente également une encoche 18 venant en regard de l'extrémité correspondante de la rainure 15, et forme un logement 19 de réception d'un flasque 28 d'un embout 22 de la barrette 5 décrit plus loin. Le tube 12 reçoit le ressort 13 à l'intérieur de lui et reçoit les embouts 14 dans ses extrémités, de façon coulissante ; ce tube 12 est destiné à être emmanché dans les viroles 17 des deux flasques 11 de telle façon que les embouts 14 traversent les trous coaxiaux à ces viroles et que ces embouts puissent coulisser dans ces trous. Comme cela se comprend, ces embouts 14 peuvent être pressés vers l'intérieur de la pièce 10 à l'encontre de la force élastique du ressort 13, pour permettre l'engagement du corps 4 dans le châssis 2, puis, une fois placés en face des trous 9 respectifs, sont rappelés en position sortie par rapport à la pièce 10, formant ainsi des tourillons qui permettent le montage rotatif du corps 4 dans le châssis 2, comme montré sur les figures 1 et 2.

La barrette 5 est formée par une pièce principale 20, une plaquette 21 de rigidification et deux embouts 22.

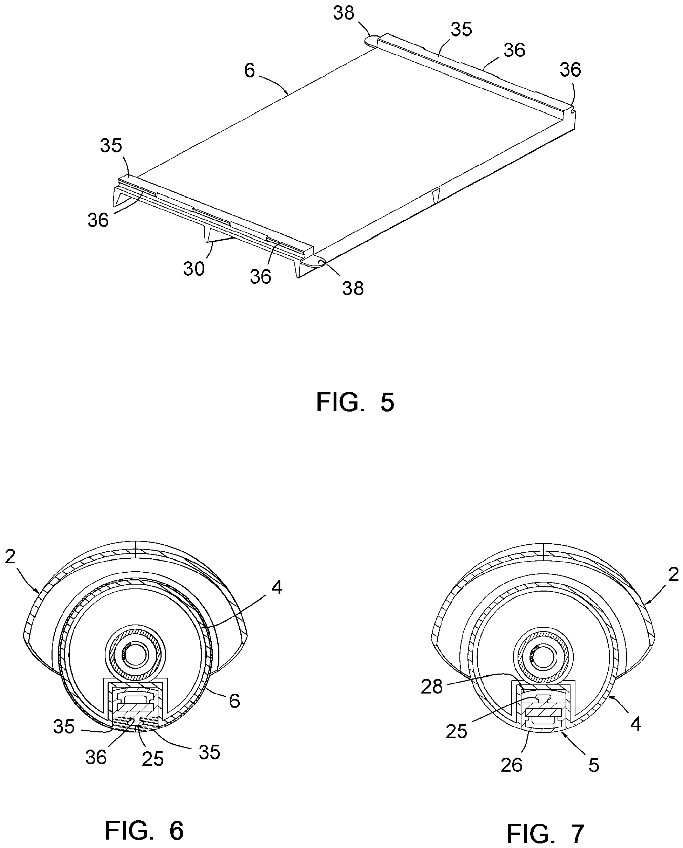

La pièce principale 20 présente extérieurement une section telle qu'elle est apte à être engagée de façon ajustée dans la rainure 15, selon deux positions opposées ; une première de ces positions, qui permet le montage d'une plaque 6 sur la pièce 10, est visible sur les figures 2 ou 6, et la deuxième position, qui permet de combler la rainure 15 pour constituer un corps de rouleau 4 purement cylindrique, à paroi lisse, est visible sur la figure 7. Sur l'un de ses côtés longitudinaux, la pièce principale 20 forme une face plane au centre de laquelle se trouve une nervure 25 à section transversale en T. Sur son côté opposé à ce premier côté, la pièce 20 forme surface incurvée 26 de même rayon de courbure que la pièce 10.

La pièce 20 est creuse intérieurement et forme une glissière de réception ajustée de la plaquette de renforcement 21.

Chaque embout 22 présente une portion de montage 27 apte à être engagée avec frottements dans la pièce 20 et un flasque d'extrémité 28. Ce flasque 28 présente deux bords incurvés opposés situés respectivement sur le côté de la nervure 25 et sur le côté de la surface incurvée 26, dont les rayons de courbure sont identiques à celui de la paroi courbe de la pièce 10 ; en référence aux figures 6 et 7, il se comprend que, dans l'une ou l'autre desdites première ou deuxième positions de la barrette 5, les bords incurvés des flasques 28 qui sont situés sur l'extérieur de la pièce 10 viennent dans le prolongement de la face circonférentielle de la pièce 10 alors que les bords incurvés opposés de ces flasques 28 sont en appui contre la paroi définissant le fond de la rainure 15.

Les flasques 28 sont en outre dimensionnés latéralement de façon à être reçus avec frottement dans les logements 19 des flasques 11, ces frottements étant suffisants pour assurer la rétention de la barrette 5 sur le corps de rouleau 4 lors du travail d'une pâte mais étant insuffisants pour résister à une action manuelle d'extraction de la barrette 5 hors de la rainure 15.

Les plaques 6 sont réalisées en silicone, par moulage ; sur leurs faces visibles sur la figure 4, elles comprennent différents reliefs 30, 31 aménagés sur elles par moulage, d'un seul tenant avec elles. Ces reliefs sont, dans les exemples représentés, sous la forme de nervures minces 30 permettant, lorsque l'ustensile 1 est déplacé sur une pâte, de découper cette pâte avant cuisson, afin de diviser la pâte en des pâtons de forme appropriée pour la confection des produits à réaliser, ou qui, après cuisson de la pâte, permettent séparer la pâte cuite en des produits de forme déterminée, en particulier des biscuits ; s'agissant de la plaque la plus à droite sur la figure 4, ces reliefs sont également sous la forme de picots 31 permettant de donner à la pâte une conformation déterminée, propre aux produits à réaliser. Les reliefs en question peuvent également être propres à marquer la pâte pour, par exemple, aménager des motifs particuliers sur elle, notamment des motifs décoratifs.

Sur leurs faces opposées à celles présentant les reliefs 30, 31, chaque plaque 6 présente deux nervures 35 le long de ses bords destinés à être placés dans le sens longitudinal de la pièce 10. Les flancs de ces nervures 35 qui sont situés sur l'intérieur de la plaque 6 sont plans et perpendiculaires à la majeure surface de la plaque, formant des premières surfaces de liaison circonférentielle d'une plaque 6 par rapport à la pièce 10, plus précisément par rapport aux parois 16 qui délimitent latéralement la rainure 15, lesquelles parois 16 forment des deuxièmes surfaces de liaison circonférentielle d'une plaque 6 à la pièce 10.

Les deux plaques 6 situées le plus à gauche sur la figure 4 sont destinées à être utilisées avec la barrette 5 montrée sur les figures 2, 3 et 6 ; les flancs des nervures 35 de ces plaques 6 qui sont situés sur l'extérieur des plaques 6 présentent des bourrelets 36 profilés de manière complémentaire au profil que présente latéralement la nervure en T 25, de telle sorte que ces nervures 35 soient aptes à être engagées de façon légèrement forcée, avec déformation élastique du matériau constituant la plaque 6, sur cette nervure en T 25, comme visible sur la figure 6. La forme en T de cette nervure 25 constitue un premier moyen de liaison radiale desdits bords d'une plaque 6, et lesdits bourrelets 36 des nervures 35 constituent des deuxièmes moyens de liaison radiale de ces mêmes bords d'une plaque 6.

Il apparaît sur les figures 4 et 5 que ces bourrelets 36 sont interrompus de proche en proche de façon à favoriser la déformation du matériau constituant la plaque 6.

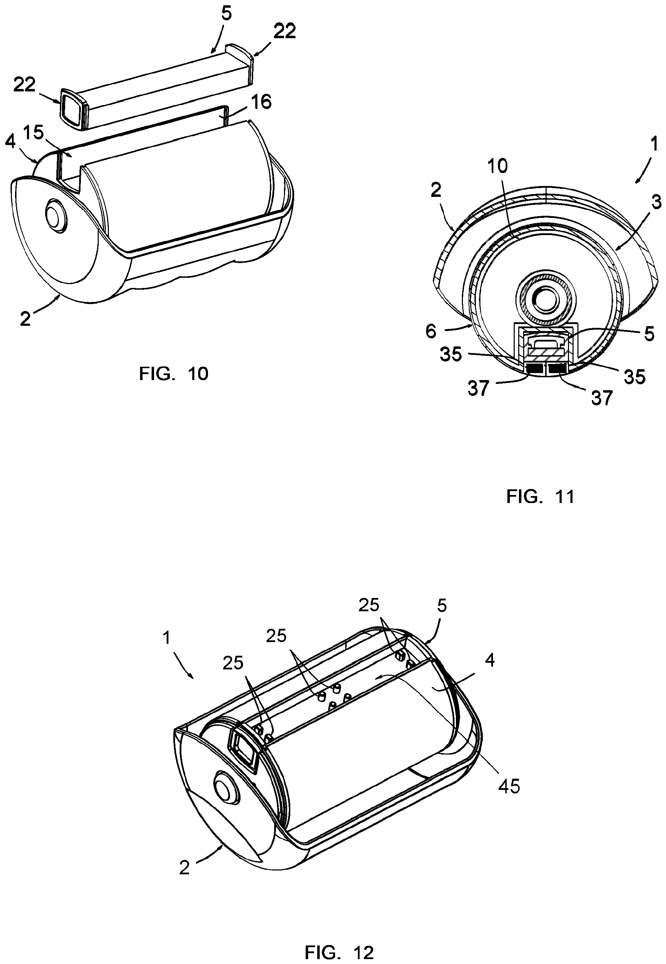

La plaque 6 située le plus à droite sur la figure 4 est, quant à elle, destinée à être utilisée avec l'ustensile 1 représenté sur les figures 10 et 11, à liaison magnétique des nervures 35 à la barrette 5 ; les faces extérieures de ces nervures 35 sont planes et lisses et ces nervures 35 contiennent, noyées en elles, des barrettes 37 en matériau magnétique, visibles sur la figure 11, qui viennent en relation 'attraction magnétique avec la plaquette 21.

En outre, chaque plaque 6 présente une languette latérale de traction 38 au niveau d'une extrémité longitudinale de chaque nervure 35, faisant saillie latéralement par rapport à la plaque. Cette languette 38 est destinée à être saisie manuellement de façon à exercer une traction sur la zone voisine de la plaque afin de permettre l'extraction des bourrelets 36 hors de leur position d'engagement avec la nervure 25.

Il se comprend que chaque plaque 6 présente, dans un état de non déformation élastique, la forme plane visible sur les figures 4 et 5, qui est la forme selon laquelle chaque plaque est obtenue à l'issue de son moulage, mais que chaque plaque 6 est apte à être déformée élastiquement de façon à prendre la forme enroulée autour de la pièce 10 visible sur la figure 6, dans laquelle lesdits bords de cette plaque équipés des nervures 35 sont placés et retenus l'un contre l'autre, dans la continuité l'un de l'autre.

Il se comprend donc également que chaque plaque 6 présente, dans une direction perpendiculaire aux nervures 35 une dimension qui correspond à la circonférence de la paroi périphérique courbe de la pièce 10.

En pratique, l'utilisateur, lorsqu'il désire monter une plaque 6 sur le corps 4 de rouleau, place la barrette 5 dans la rainure 15 dans ladite première position, montrée sur la figure 6, puis engage la nervure 35 de l'un des deux bords dans la rainure 15 en plaçant cette nervure contre la paroi 16 qui délimite latéralement cette rainure, puis amène les bourrelets 36 de cette nervure 35 en engagement avec le côté latéral correspondant de la nervure en T 25 ; la plaque 6 est ensuite enroulée autour du corps 4, puis la nervure 35 de l'autre des deux bords est amenée en engagement avec l'autre paroi latérale 16 et avec l'autre côté latéral de la nervure en T 25.

L'ustensile 1 obtenu, tel qu'il est visible sur la figure 1, peut alors être utilisé pour marquer une pâte selon les reliefs 30, 31 que comprend la plaque 6 montée sur le corps 4.

Pour retirer une plaque 6, l'utilisateur exerce une traction sur la languette 38 afin d'extraire les nervures 35 de leur engagement avec lesdites parois latérales 16 et ladite nervure en T 25.

S'il souhaite au contraire se servir de l'ustensile 1 avec un corps de rouleau 4 lisse classique, en particulier pour étendre une pâte, l'utilisateur place alors la barrette 5 dans la rainure 15 cette barrette étant alors placée dans ladite deuxième position visible sur la figure 7.

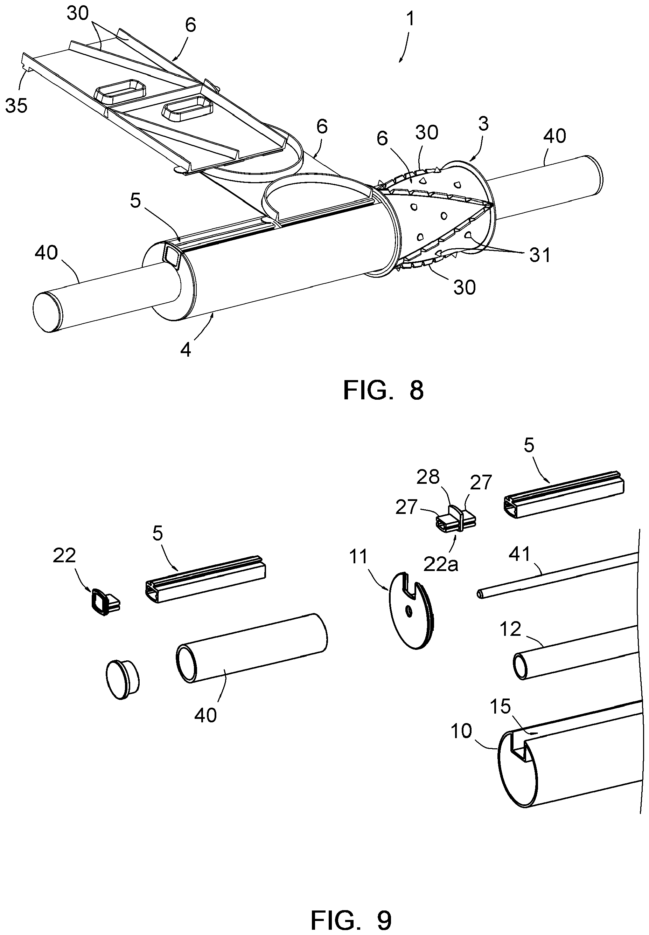

Les figures 8 et 9 montrent un ustensile 1 mettant en œuvre les mêmes principes que décrits ci-dessus ; par simplification, les parties ou éléments déjà décrits qui se retrouvent de manière identique ou similaire sont désignés par les mêmes références numériques que précédemment.

Dans ce cas, l'ustensile 1 forme un rouleau à pâtisserie proprement dit, c'est-à-dire comprenant un rouleau 3 de longueur notablement plus importante que celle du rouleau de l'ustensile décrit précédemment, et dont l'actionnement est réalisé par la saisie de deux poignées latérales 40 par rapport auxquelles le rouleau 3 est monté rotatif, sur une tige 41. Dans l'exemple représenté, la pièce 10 présente une longueur trois fois plus importante que la pièce 10 décrit précédemment et est apte à recevoir trois plaques 6, qui peuvent être différentes les unes des autres comme montré sur la figure 8 ou qui peuvent être identiques entre elles.

Dans cette forme de réalisation, comme visible sur la figure 9, les barrettes 5 sont raccordées les unes aux autres, dans le prolongement les unes des autres, au moyen d'embouts 22a dont chacun présente deux portions de montage 27 situées de part et d'autre du flasque 28 que comprend cet embout.

Les figures 10 et 11 représentent un ustensile 1 similaire à celui décrit en référence aux figures 1 à 7, sinon que, dans ce cas, la barrette 5 est dépourvue de nervure en T 25 et qu'elle comprend, une plaquette longitudinale de renfort 21 en matériau magnétique ; comme déjà décrit, les flancs des nervures 35 sont alors plans et lisses sur les côtés tournés vers l'extérieur des plaques 5 et ces nervures 35 logent des barrettes magnétiques 37 aptes à venir en relation d'attraction avec la plaquette 21 en position de montage, comme visible sur la figure 11. Pour le reste, l'ustensile 1 fonctionne de façon identique à ce qui a été décrit plus haut.

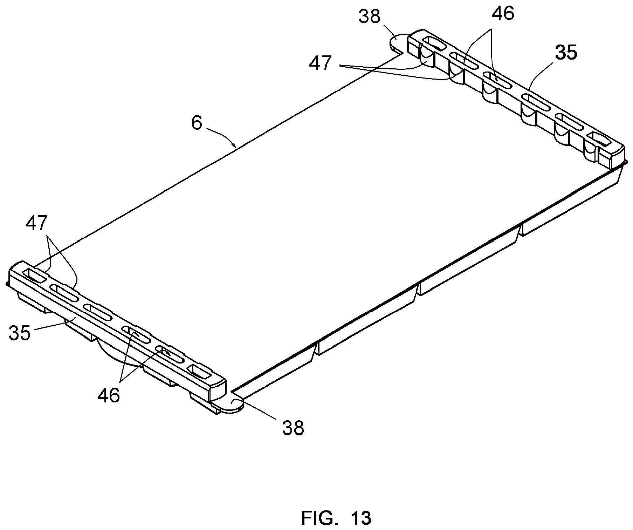

Les figures 12 et 13 montrent un ustensile 1 selon une troisième forme de réalisation, avec, pour désigner des parties ou éléments déjà décrits dans les autres formes de réalisation, la réutilisation des mêmes références numériques que celles déjà utilisées pour ces même parties ou éléments.

Dans le cas de cette troisième forme de réalisation, la nervure 25 précitée est remplacée par des plots 25 situés sur une face 45 que forme la barrette 5, et les nervures 35 comprennent des cavités 46 dont certaines sont aptes à être engagées sur ces plots 25 et dont les autres confèrent aux nervures une capacité augmentée de déformation élastique. Les flancs des nervures 35 qui sont situés sur l'intérieur de la plaque 6 présentent des bossages 47 qui sont situés en regard des cavités 46 respectives. Comme cela se comprend, chaque cavité 46 aménage, entre elle-même et le bossage 47 correspondant, une portion de paroi de nervure 35 qui est rendue souple et élastique par la présence de la cavité 46 sur l'un des côtés de cette paroi.

La présence des bossages 47 sur les flancs internes des nervures 35 fait que ces nervures 35 doivent être insérées de façon légèrement forcées dans la rainure formée par le corps de rouleau 4, cette insertion étant rendue possible par la déformabilité élastique desdites portions de paroi ; il en résulte l'existence de frottements entre les nervures 35 et les côtés du corps 4 délimitant la rainure que forme ce corps, lesquels frottements assurent le parfait maintien en position de la plaque 6 sur le corps de rouleau 4.

## Revendications

1. Ustensile de cuisine (1) permettant de travailler une pâte qui comprend pièce de révolution (3) dont la périphérie est apte à être équipée d'une pièce allongée (6) en un matériau souple présentant des reliefs (30, 31), ces reliefs permettant de découper et/ou marquer une pâte avant cuisson lorsque la pièce de révolution (3) est déplacée en roulement sur cette pâte,
**caractérisé en ce que** ladite pièce de révolution est un rouleau (3) et **en ce que** ce rouleau comprend :
- au moins une plaque (6) en une matière élastiquement souple, comprenant lesdits reliefs (30, 31) aménagés sur elle ; la plaque (6) est apte à être déformée élastiquement de façon à pouvoir adopter une forme enroulée dans laquelle deux bords opposés de la plaque (6) sont placés l'un contre l'autre ; chacun de ces deux bords opposés comprend des premiers moyens de liaison circonférentielle (35) et des premiers moyens de liaison radiale (35, 36 ; 37) ; et
- un corps (4) de rouleau, cylindrique ou essentiellement cylindrique, comprenant des deuxièmes moyens de liaison circonférentielle (16) aptes à venir en engagement, de façon libérable, avec lesdits premiers moyens de liaison circonférentielle (35) pour lier circonférentiellement lesdits bords opposés audit corps (4), et des deuxièmes moyens de liaison radiale (25 ; 21) aptes à venir en engagement, de façon libérable, avec lesdits premiers moyens de liaison radiale (35, 36 ; 37) pour lier radialement lesdits bords opposés audit corps (4) ;
- chaque plaque (6) présente, au niveau de chacun desdits bords et le long de ces bords, des nervures (35) dont un flanc constitue lesdits premiers moyens de liaison circonférentielle,
- ledit corps (4) présente une rainure longitudinale (15), aménagée radialement vers l'intérieur de ce corps (4) et délimitée latéralement par des parois (16) de ce corps (4), ces parois (16) constituant lesdits deuxièmes moyens de liaison circonférentielle, et
- la rainure (15) est dimensionnée de façon à recevoir, de façon ajustée, lesdites nervures (35) l'une contre l'autre ;
la dimension de la plaque (6) selon une direction perpendiculaire auxdits bords opposés correspond à la circonférence dudit corps (4) de telle sorte que, lorsque la plaque (6) est enroulée sur ce corps (4) et que lesdits moyens de liaison (16, 25, 35, 36 ; 21, 37) respectifs sont en engagement, lesdits bords opposés soient maintenus sur ledit corps (4) en étant à proximité l'un de l'autre et en formant ainsi une surface circonférentielle continue.

2. Ustensile de cuisine (1) selon la revendication 1, **caractérisé en ce que** chaque plaque (6) est obtenue par moulage, avec lesdits reliefs (30, 31) aménagés d'un seul tenant avec elle.

3. Ustensile de cuisine (1) selon la revendication 1, **caractérisé en ce que** chaque nervure (35) comprend lesdits premiers moyens de liaison radiale (36 ; 46, 47) et **en ce que** le corps (4) comprend, au niveau de la rainure (15), lesdits deuxièmes moyens de liaison radiale (25 ; 21).

4. Ustensile de cuisine (1) selon la revendication 3, **caractérisé en ce qu'**il comprend une barrette (5) présentant lesdits deuxièmes moyens de liaison radiale (25 ; 21) sur un premier côté longitudinal et présentant une surface incurvée (26) sur un deuxième côté longitudinal opposé audit premier côté longitudinal, cette surface incurvée (26) ayant un même rayon de courbure que le rayon de courbure dudit corps (4) ; la barrette (5) est apte à être insérée dans ladite rainure (15) dans une première position, dans laquelle son premier côté longitudinal est situé sur le côté radialement extérieur de la rainure (15), exposant ainsi lesdits deuxièmes moyens de liaison radiale (25 ; 21) dans la rainure (15) de façon à permettre la venue desdits premiers moyens de liaison radiale (35, 36 ; 37 ; 46, 47) en engagement avec ces deuxièmes moyens de liaison radiale (25 ; 21) ; la barrette (5) est également apte à être insérée dans ladite rainure (15) dans une deuxième position, dans laquelle son deuxième côté longitudinal est situé sur le côté radialement extérieur de la rainure (15), exposant ladite surface incurvée (26) sur le côté radialement extérieur de la rainure (15) ; la barrette (5) présente, entre ledit premier côté et ledit deuxième côté, une dimension telle que, dans ladite deuxième position, ladite surface incurvée (26) soit située en affleurement avec la surface circonférentielle du corps (4) et dans la continuité de cette surface.

5. Ustensile de cuisine (1) selon l'une des revendications 1 à 4, **caractérisé en ce que** les moyens de liaison radiale (25, 35, 36 ; 25, 46, 47) sont à interengagement, en particulier à clipsage.

6. Ustensile de cuisine (1) selon l'une des revendications 1 à 4, **caractérisé en ce que** les moyens de liaison radiale (21, 37) sont magnétiques.

7. Ustensile de cuisine (1) selon l'une des revendications 1 à 6, **caractérisé en ce que** chaque plaque (6) comprend une languette (38) de traction solidaire d'elle.

8. Ustensile de cuisine (1) selon la revendication 4 ou la revendication 5, **caractérisé en ce que** les moyens de liaison radiale (25, 35, 46, 47) comprennent :
- des plots (25) situés sur une face (45) de la barrette (5) ;
- les nervures (35), qui comprennent des cavités (46) dont certaines sont aptes à être engagées sur ces plots (25) et d'autres confèrent aux nervures (35) une capacité augmentée de déformation élastique ;
- des bossages (47) aménagés sur les flancs des nervures (35) qui sont situés sur l'intérieur de la plaque (6), ces bossages (47) étant situés en regard des cavités (46) respectives ; chaque cavité (46) aménage, entre elle-même et le bossage (47) correspondant, une portion de paroi de nervure (35) qui est rendue souple et élastique par la présence de la cavité (46) sur l'un des côtés de cette paroi.

## Patentansprüche

1. Küchengerät (1) zur Bearbeitung eines Teiges, das ein Rotationsteil (3) umfasst, dessen Umfang dazu eingerichtet ist, mit einem langgezogenen Teil (6) aus einem flexiblen Material versehen zu werden, das Erhöhungen (30, 31) aufweist, wobei diese Erhöhungen gestatten, einen Teig vor dem Garen zu stanzen und/oder zu prägen, wenn das Rotationsteil (3) walzend auf diesem Teig bewegt wird, **dadurch gekennzeichnet, dass** das Rotationsteil eine Walze (3) ist und dass diese Walze umfasst:
- wenigstens eine Platte (6) aus einem elastisch flexiblen Material, welche die Erhöhungen (30, 31) umfasst, die auf ihr vorgesehen sind; die Platte (6) ist dazu eingerichtet, derart elastisch verformt zu werden, dass sie eine gewickelte Form annehmen kann, in der zwei gegenüberliegende Ränder der Platte (6) gegeneinander platziert sind; jeder dieser zwei gegenüberliegenden Ränder umfasst erste Mittel für die umfängliche Verbindung (35) und erste Mittel für die radiale Verbindung (35, 36; 37); und
- einen ersten zylindrischen oder im Wesentlichen zylindrischen Walzenkörper (4), umfassend zweite Mittel für die umfängliche Verbindung (16), die dazu eingerichtet sind, lösbar mit den ersten Mitteln für die umfängliche Verbindung (35) in Eingriff zu kommen, um die gegenüberliegenden Ränder mit dem Körper (4) zu verbinden, und zweite Mittel für die radiale Verbindung (25; 21) die dazu eingerichtet sind, lösbar mit den ersten Mitteln für die radiale Verbindung (35, 36; 37) in Eingriff zu kommen, um die gegenüberliegenden Ränder mit dem Körper (4) zu verbinden;
- jede Platte (6) weist, im Bereich jeder der Ränder und entlang dieser Ränder, Rippen (35) auf, von denen eine Flanke die ersten Mittel für die umfängliche Verbindung bilden,
- der Körper (4) weist eine längsgerichtete Nut (15) auf, die radial zu dem Inneren dieses Körpers (4) hin vorgesehen ist und seitlich von Rändern (16) dieses Körpers (4) begrenzt ist, wobei diese Wände (16) die zweiten Mittel für die umfängliche Verbindung bilden, und
- die Nut (15) ist derart dimensioniert, dass sie, passgenau, die Rippen (35) gegeneinander aufnimmt;
die Abmessung der Platte (6) in einer zu den gegenüberliegenden Rändern senkrechten Richtung entspricht dem Umfang des Körpers (4), so dass, wenn die Platte (6) auf diesen Körper (4) gewickelt ist und wenn die jeweiligen Mittel für die Verbindung (16, 25, 35, 36; 21, 37) im Eingriff sind, die gegenüberliegenden Rändern auf dem Körper (4) gehalten werden, indem sie nahe bei einander sind und indem sie auf diese Weise eine durchgängige Umfangsfläche bilden.

2. Küchengerät (1) nach Anspruch 1, **dadurch gekennzeichnet, dass** jede Platte (6) durch Formen erhalten ist, wobei die Erhöhungen (30, 31) einteilig mit dieser vorgesehen sind.

3. Küchengerät (1) nach Anspruch 1, **dadurch gekennzeichnet**, jede Rippe (35) die ersten Mittel für die radiale Verbindung (36, 46; 47) umfasst und dass der Körper (4), im Bereich der Nut (15), die zweiten Mittel für die radiale Verbindung (25; 21) umfasst.

4. Küchengerät (1) nach Anspruch 3, **dadurch gekennzeichnet**, es einen Steg (5) umfasst, der die zweiten Mittel für die radiale Verbindung (25; 21) auf einer ersten längsgerichteten Seite umfasst und eine gekrümmte Fläche (26) auf einer zweiten längsgerichteten Seite aufweist, die der ersten längsgerichteten Seite gegenüberliegt, wobei diese gekrümmte Fläche (26) einen gleichen Krümmungsradius aufweist wie der Krümmungsradius des Körpers (4); der Steg (5) ist dazu eingerichtet, in der Nut (15) in einer ersten Stellung eingesetzt zu werden, in der seine erste längsgerichtete Seite sich auf der radial äußeren Seite der Nut (15) befindet, wodurch er die zweiten Mittel für die radiale Verbindung (25; 21) in der Nut (15) derart exponiert, dass das Ineingriffkommen der ersten Mittel für die radiale Verbindung (35, 36; 37; 46, 47) mit diesen zweiten Mitteln für die radiale Verbindung (25; 21) gestattet wird; der Steg (5) ist ferner dazu eingerichtet, in der Nut (15) in einer zweiten Stellung eingesetzt zu werden, in der seine zweite längsgerichtete Seite sich auf der radial äußeren Seite der Nut (15) befindet, wodurch er die gekrümmte Fläche (26) auf der radial äußeren Seite der Nut (15) exponiert; Der Steg (5) weist, zwischen der ersten Seite und der zweiten Seite, eine derartige Abmessung auf, dass, in der zweiten Stellung, die gekrümmte Fläche (26) bündig mit der Umfangsfläche des Körpers (4) abschließt und diese Fläche weiterführt.

5. Küchengerät (1) nach einem der Ansprüche 1 bis 4, **dadurch gekennzeichnet, dass** die Mittel für die radiale Verbindung (25, 35, 36; 25, 46, 47) miteinander im Eingriff sind, insbesondere durch Einrasten.

6. Küchengerät (1) nach einem der Ansprüche 1 bis 4, **dadurch gekennzeichnet, dass** die Mittel für die radiale Verbindung (21, 37) magnetisch sind.

7. Küchengerät (1) nach einem der Ansprüche 1 bis 6, **dadurch gekennzeichnet, dass** jede Platte (6) eine Zuglasche (38) umfasst, die fest mit ihr verbunden ist.

8. Küchengerät (1) nach Anspruch 4 oder Anspruch 5, **dadurch gekennzeichnet, dass** die Mittel für die radiale Verbindung (25, 35, 46, 47) umfassen:
- Stifte (25), die sich auf einer Fläche (45) des Stegs (5) befinden;
- Rippen (35), die Vertiefungen (46) umfassen, von denen bestimmte dazu eingerichtet sind, auf diese Stifte (25) aufgesteckt zu werden, und andere den Rippen (35) eine erhöhte elastische Verformbarkeit verleihen;
- Höcker (47), die auf den Flanken der Rippen (35) vorgesehen sind, die sich auf dem Inneren der Platte (6) befinden, wobei diese Höcker (47) den jeweiligen Vertiefungen (46) gegenüberliegen; wobei jede Vertiefung (46), zwischen sich und dem entsprechenden Höcker (47) einen Rippenwandteil (35) vorsieht, der durch das Vorhandensein der Vertiefung (46) auf einer der Seiten dieser Wand biegsam und elastisch ist.

## Claims

1. Cooking utensil (1) for working dough which comprises a rotating part (3) whose periphery is adapted to be equipped with an elongated part (6) made of flexible material having reliefs (30, 31), these reliefs being used to cut and/or mark a dough before cooking when the rotating part (3) is rolled on this dough,
**characterised in that** said rotating part is a roller (3) and **in that** this roller comprises:
- at least one plate (6) made of an elastically flexible material, comprising said reliefs (30, 31) formed thereon; the plate (6) is adapted to be elastically deformed so as to be able to adopt a wound shape in which two opposite edges of the plate (6) are placed against each other; each of these two opposite edges comprises first circumferential connecting means (35) and first radial connecting means (35, 36; 37); and
- a cylindrical or substantially cylindrical roller body (4), comprising second circumferential connecting means (16) adapted to engage, releasably, with said first circumferential connecting means (35) to circumferentially connect said opposite edges to said body (4), and second radial connecting means (25; 21) adapted to engage, releasably, with said first radial connecting means (35, 36; 37) to radially connect said opposite edges to said body (4);
- each plate (6) is provided, on each of said edges and along these edges, with ribs (35) having a flank forming said first circumferential connecting means,
- said body (4) is provided with a longitudinal groove (15), formed radially towards the inside of this body (4) and laterally delimited by walls (16) of this body (4), these walls (16) forming said second circumferential connecting means, and
- the groove (15) is dimensioned so as to receive, with a tight fit, said ribs (35) against each other;
the dimension of the plate (6) along a direction perpendicular to said opposite edges corresponds to the circumference of said body (4) such that, when the plate (6) is wound on this body (4) and said respective connecting means (16, 25, 35, 36; 21, 37) are engaged, said opposite edges are held on said body (4) by being near each other and thus forming a continuous circumferential surface.

2. Cooking utensil (1) according to claim 1, **characterised in that** each plate (6) is obtained by moulding, with said reliefs (30, 31) formed in one piece with it.

3. Cooking utensil (1) according to claim 1, **characterised in that** each rib (35) comprises said first radial connecting means (36; 46, 47) and **in that** the body (4) comprises, at the groove (15), said second radial connecting means (25; 21).

4. Cooking utensil (1) according to claim 3, **characterised in that** it comprises a strip (5) provided with said second radial connecting means (25; 21) on a first longitudinal side and provided with a curved surface (26) on a second longitudinal side opposite said first longitudinal side, this curved surface (26) having the same radius of curvature as the radius of curvature of said body (4); the strip (5) is adapted to be inserted in said groove (15) in a first position, in which its first longitudinal side is located on the radially outer side of the groove (15), thus exposing said second radial connecting means (25; 21) in the groove (15) so that said first radial connecting means (35, 36; 37; 46, 47) can engage with these second radial connecting means (25; 21); the strip (5) is also adapted to be inserted in said groove (15) in a second position, in which its second longitudinal side is located on the radially outer side of the groove (15), exposing said curved surface (26) on the radially outer side of the groove (15); the strip (5) is provided, between said first side and said second side, with a dimension such that, in dais second position, said curved surface (26) is located flush with the circumferential surface of the body (4) and in the continuity of this surface.

5. Cooking utensil (1) according to one of claims 1 to 4, **characterised in that** the radial connecting means (25, 35, 36; 25, 46, 47) can engage with each other, in particular by clipping.

6. Cooking utensil (1) according to one of claims 1 to 4, **characterised in that** the radial connecting means (21, 37) are magnetic.

7. Cooking utensil (1) according to one of claims 1 to 6, **characterised in that** each plate (6) comprises a pulling tab (38) attached to it.

8. Cooking utensil (1) according to claim 4 or 5, **characterised in that** the radial connecting means (25, 35, 46, 47) comprise:
- studs (25) located on one side (45) of the strip (5);
- the ribs (35), which comprise cavities (46), some of which being adapted to be engaged on these studs (25) and others increasing the ability of the ribs (35) to undergo elastic deformation;
- bosses (47) formed on the flanks of the ribs (35) which are located on the inside of the plate (6), these bosses (47) being located opposite respective cavities (46); each cavity (46) forms, between itself and the corresponding boss (47) a portion of rib (35) wall which is made flexible and elastic by the presence of the cavity (46) on one side of this wall.
